# EUROPEAN PATENT APPLICATION

(11) **EP 4 496 329 A1**
(43) Date of publication of application: **22.01.2025**
(21) Application number: 23769517.6
(22) Date of filing: 20.02.2023
(51) Int. Cl.: H04N 23/00

(54) **PHOTOGRAPHIC PROCESSING METHOD AND APPARATUS BASED ON VIRTUAL REALITY, AND ELECTRONIC DEVICE**

(30) Priority: 17.03.2022 CN 202210264018
(71) Applicant: Beijing Zitiao Network Technology Co., Ltd., Beijing 100190 (CN)
(72) Inventor: ZHAO, Wenhui, Beijing 100086 (CN); WU, Yuhan, Beijing 100086 (CN); HUANG, Xiangyu, Beijing 100086 (CN); CHEN, Jingfu, Beijing 100086 (CN); WU, Peipei, Beijing 100086 (CN); LI, Xiaolin, Beijing 100086 (CN); JI, Liyue, Beijing 100086 (CN); WANG, Can, Beijing 100086 (CN); HE, Xiang, Beijing 100086 (CN)
(74) Representative: Dentons UK and Middle East LLP
(86) International application number: PCT/CN2023/077240
(87) International publication number: WO 2023/174009

(57) **Abstract**

The present disclosure relates to a photographic processing method and apparatus based on virtual reality, and an electronic device, and relates to the technical field of virtual reality. The method comprises: first, in response to a calling instruction for a photographic function, acquiring a photographic device model; then, displaying the photographic device model in a virtual reality space, and displaying framing picture information in a preset framing area of the photographic device model, wherein the framing picture information is obtained according to virtual-reality scene information; and in response to an instruction for confirming photographing, recording real-time framing picture information in the framing area, so as to obtain photographed image information. By means of applying the technical solution in the present disclosure, a user in a virtual reality environment can have a feeling of using a camera to perform photographing in a physical environment, thereby improving the VR use experience of the user.

## Description

### CROSS-REFERENCE TO RELATED APPLICATIONS

The present disclosure is based on and claims priority to the Chinese Patent Application No. 202210264018.7 entitled "SHOOTING PROCESSING METHOD AND APPARATUS BASED ON VIRTUAL REALITY, AND ELECTRONIC DEVICE" and filed on March 17, 2022, the disclosure of which is incorporated by reference herein in its entirety.

### TECHNICAL FIELD

The present disclosure relates to the technical field of virtual reality, and in particular, to a shooting processing method and apparatus based on virtual reality, and an electronic device.

### BACKGROUND

With the continuous development of social productivity and scientific technology, demands for Virtual Reality (VR) technology in various industries are increasing. The VR technology has made great progress and gradually becomes a new scientific and technical field.

At present, based on the VR technology, users are enabled to watch video content such as virtual live, for example, after a user wears a VR device, he enters a virtual concert site and watches performance content, as if he was on the site.

However, shooting requirements of the user in the process of watching VR video cannot be met by the related art, influencing VR usage experience of the user.

### SUMMARY

In view of this, the present disclosure provides a shooting processing method and apparatus based on virtual reality, and an electronic device, which mainly aim to alleviate the technical problem that shooting requirements of the user in the process of watching VR video cannot be met by the prior art, influencing VR usage experience of the user.

In a first aspect, the present disclosure provides a shooting processing method based on virtual reality, comprising:
in response to a calling instruction for a shooting function, acquiring a shooting equipment model;
displaying the shooting equipment model in a virtual reality space, and displaying viewing screen information in a preset viewing frame area of the shooting equipment model, wherein the viewing screen information is obtained according to virtual reality scene information; and
in response to an instruction for confirming to shoot, obtaining shot image information by recording real-time viewing screen information in the viewing frame area.

In a second aspect, the present disclosure provides a shooting processing apparatus based on virtual reality, comprising:
an acquiring module configured to, in response to a calling instruction for a shooting function, acquire a shooting equipment model;
a displaying module configured to, display the shooting equipment model in a virtual reality space, and display viewing screen information in a preset viewing frame area of the shooting equipment model, wherein the viewing screen information is obtained according to virtual reality scene information; and
a recording module configured to, in response to an instruction for confirming to shoot, obtain shot image information by recording real-time viewing screen information in the viewing frame area.

In a third aspect, the present disclosure provides a computer-readable storage medium having stored thereon a computer program which, when executed by a processor, implements the shooting processing method based on virtual reality of the first aspect.

In a fourth aspect, the present disclosure provides an electronic device, comprising a storage medium, a processor, and a computer program stored on the storage medium and executable on the processor, wherein the processor, when executing the computer program, implements the shooting processing method based on virtual reality of the first aspect.

By means of the above technical solutions, compared with the prior art, the shooting processing method and apparatus based on virtual reality and the electronic device can provide shooting services for users in the process of watching VR video. Specifically, when receiving a calling instruction for a shooting function, the VR device may display a shooting equipment model in a virtual reality space and display viewing screen information in a preset viewing frame area of the shooting equipment model, wherein the viewing screen information is obtained according to virtual reality scene information, and when receiving an instruction for confirming to shoot, the VR device may obtain shot image information by recording real-time viewing screen information in the viewing frame area. With the technical solutions of the present disclosure, the user in a virtual reality environment is enabled to experience the feeling of shooting with a camera in a real environment, improving VR usage experience of the user.

The foregoing only describes an overview of the technical solutions of the present disclosure, and the embodiments of the present disclosure are described below in order that the technical means of the present disclosure may be more clearly known such that they may be implemented according to the content of the specification, and the foregoing and other objectives, features, and advantages of the present disclosure may be more clearly understood.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.

In order to more clearly illustrate the embodiments of the present disclosure or technical solutions in the prior art, the drawings used in the description of the embodiments or the prior art will be briefly described below, and it is apparent for those skilled in the art that other drawings can be obtained according to these drawings without creative labor.
Fig. 1 is a schematic flowchart illustrating a shooting processing method based on virtual reality according to an embodiment of the present disclosure;
Fig. 2 is a schematic flowchart illustrating another shooting processing method based on virtual reality according to an embodiment of the present disclosure;
Fig. 3 is a schematic diagram illustrating an example display effect of an interactive component model in the form of a hover ball according to an embodiment of the present disclosure;
Fig. 4 is a schematic diagram illustrating an example display effect of a shooting equipment model according to an embodiment of the present disclosure;
Fig. 5 is a schematic diagram illustrating an example display effect that a shot photo has been saved according to an embodiment of the present disclosure;
Fig. 6 is a schematic structural diagram of a shooting processing apparatus based on virtual reality according to an embodiment of the present disclosure.

### DETAILED DESCRIPTION

Embodiments of the present disclosure will be described in more detail below with reference to the accompanying drawings. It should be noted that, the embodiments in the present disclosure and the features of the embodiments may be combined with each other without conflict.

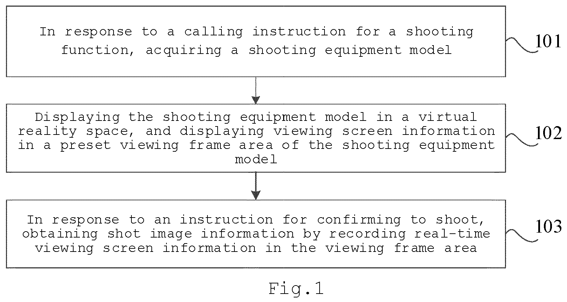

In order to alleviate the technical problem that shooting requirements of the user in the process of watching VR video cannot be met by the related art and the VR usage experience of the user is influenced, the present embodiment provides a shooting processing method based on virtual reality, which can be applied to a VR device side, and as shown in Fig. 1, the method comprises:
Step 101, in response to a calling instruction for a shooting function, acquiring a shooting equipment model.

The shooting equipment model may be a preset model related to a shooting equipment, such as a smartphone model, a selfie stick camera model, or the like.

Step 102, displaying the shooting equipment model in a virtual reality space, and displaying viewing screen information in a preset viewing frame area of the shooting equipment model.

The viewing screen information is obtained according to virtual reality scene information.

Optionally, the displaying viewing screen information in a preset viewing frame area of the shooting equipment model may comprise: firstly, acquiring a shooting range of the shooting equipment model; then, selecting, from a virtual reality image, scene information corresponding to the shooting range for render-to-texture; and finally, placing a rendered texture map in the preset viewing frame area of the shooting equipment model.

The shooting range of the shooting equipment is a range to be shot by a user for a virtual reality scene in the process of watching VR video, and for the present embodiment, relevant parameters for controlling the shooting range of the shooting equipment may be preset, for example, the parameters such as a field of view (FOV) and the like may be preset. The shooting range can be adjusted according to the requirements of the user, and then required photos or videos or the like can be shot.

The scene information may include virtual scene content that can be seen within the shooting range, and for example, it is possible to use a Camera tool of Unity to select, from the virtual reality image, the scene information corresponding to the shooting range of the shooting equipment model for render-to-texture (RTT). And then the rendered texture map is placed in the preset viewing frame area of the shooting equipment model, so as to display the viewing screen information in the preset viewing frame area of the shooting equipment model.

The viewing frame area can be preset according to actual requirements, and the purpose is to enable a user to preview an effect of the selected scene information map before confirming to shoot.

For example, a three-dimensional spatial position of the shooting equipment model and a three-dimensional spatial position of a virtual character of the user per se are bound in advance, then the currently displayed three-dimensional spatial position of the shooting equipment model is determined based on the real-time three-dimensional spatial position of the virtual character of the user per se, and the shooting equipment model is displayed according to such position, so that the effect of the user using the shooting equipment is presented, for example, the effect of the virtual character of the user per se holding a selfie stick camera by hand is presented. The viewing frame can be a display screen position of the selfie stick camera, and the rendered texture map is placed in the area of the viewing frame, thereby simulating a viewing screen preview effect similar to that before shooting with a real camera.

Unlike the existing screen recording mode, the virtual shooting mode in the solution of the present embodiment is to perform render-to-texture on the VR scene information in the selected range in real time and then stick it into the area of the viewing frame, without needing sensors of the entity camera module, so that the picture quality of the shot image can be ensured. And in the moving process of the shooting equipment, the VR scene content in a dynamic moving shooting range can be presented in the preset viewing frame area in real time, and the viewing screen presenting effect will not be influenced by factors such as swing of the shooting equipment and the like, so that a real shooting experience of a user can be well simulated, and the VR usage experience of the user can be improved.

Step 103, in response to an instruction for confirming to shoot, obtaining shot image information by recording real-time viewing screen information in the viewing frame area.

Optionally, the shot image information may specifically include: shot photo information (i.e., picture information) or video recording information (i.e., recorded video information). In the present embodiment, specifically, a photo service or a video recording service may be selected according to actual requirements of the user. Based on the above optional manner of obtaining the viewing screen information through the texture map, step 103 may specifically include: obtaining the shot image information by recording real-time map information in the viewing frame area.

For example, if the user selects a photo service, the VR device may take real-time single map information within the viewing frame area as the photo information shot by the user upon receiving an instruction from the user for confirming to shoot. However, if the user selects a video recording service, the VR device can record real-time map information within the viewing frame area as video frame data upon receiving an instruction from the user for confirming to shoot, stop recording when the user confirms completion of the shooting, and generate the recorded video information according to the video frame data recorded during this period of time.

Compared with the prior art, the shooting processing method based on virtual reality provided by the present embodiment can provide a shooting service such as a photo service or a video recording service for a user in the process of watching VR video, so that the user in a virtual reality environment can experience the feeling as if the user shoots with a camera in a real environment, improving the VR usage experience of the user.

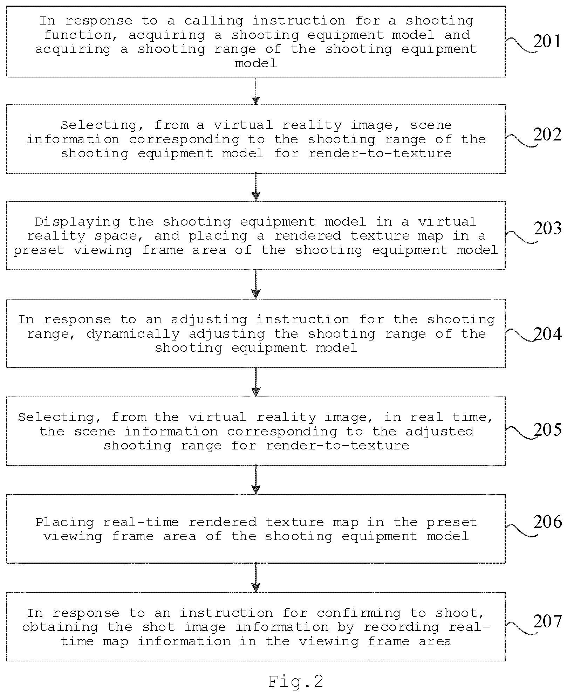

Further, as a refinement and extension of the foregoing embodiment, in order to fully describe a specific implementation process of the method of the present embodiment, the present embodiment provides a specific method as shown in Fig. 2, which comprises:
step 201, in response to a calling instruction for a shooting function, acquiring a shooting equipment model and acquiring a shooting range of the shooting equipment model.

The calling instruction for the shooting function may be used to enable the shooting function, similar to enabling a camera function. For example, a user may trigger inputting the calling instruction for the shooting function through a preset button on a manipulation device (e.g., a handle device, etc.), and then call and use the shooting function, to experience the shooting service.

There are many other optional manners for the user to input the calling instruction for the shooting function, and compared with the manner of triggering calling the shooting function using an entity device button, the present optional manner provides an improved scheme of VR manipulation without needing an entity device button, and thus can alleviate the technical problem that the entity device button is easy to damage and further easily influences the user manipulation.

Specifically, in present optional manner, image information of the user shot by the camera may be monitored, and then, according to a user hand or a user handheld device (e.g., a handle) in the image information, it may be determined whether a preset condition for displaying an interactive component model (a component model for interaction, where an interactive function event is pre-bound to each interactive component model) is met, if it is determined that the preset condition for displaying the interactive component model is met, at least one interactive component model is displayed in the virtual reality space, and finally, the interactive function event pre-bound to the interactive component model selected by the user is performed by identifying action information of the user hand or the user handheld device.

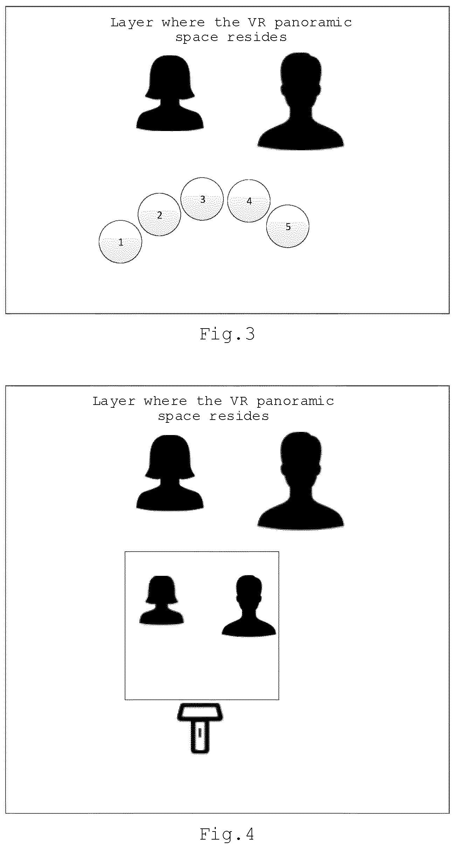

For example, a camera can be used for shooting a user hand image or a user handheld device image, a position change of the user hand gesture or the handheld device in the image can be determined based on an image recognition technology, and if it is determined that the user hand or the user handheld device has been raised by a certain amount, a user virtual hand or a virtual handheld device mapped into the virtual reality space is caused to enter the current visual angle range of the user, and then it can be evoked to display the interactive component model in the virtual reality space. As shown in Fig. 3, based on the image recognition technology, a user raising the handheld device may evoke the interactive component models, each of which is in the form of a hover ball, where each hover ball represents a manipulation function, based on which the user can interact. As shown in Fig. 3, the hover balls 1, 2, 3, 4, 5 may specifically correspond to the interactive component models such as "leaving the room", "shooting", "sending an expression", "sending bullet subtitles", "2D live", and the like.

After the interactive component model, each of which is in a form of a hover ball, are evoked, according to a subsequently monitored user hand image or user handheld device image, by identifying the position of the user hand or the user handheld device and mapping the position into the virtual reality space, a spatial position of a corresponding click mark is determined; if the spatial position of the click mark matches a spatial position of a target interactive component model in the displayed interactive component models, it is determined that the target interactive component model is the interactive component model selected by the user; and finally, the interactive function event pre-bound to the target interactive component model is performed.

The user can, by raising his left hand handle, evoke displaying the interactive component models, each of which is in the form of for example a hover ball, then select to click on an interactive component therein by moving his right hand handle position. On the VR device side, according to the user's handle image, by identifying the right hand handle position and mapping the position into the virtual reality space, a spatial position of a corresponding click mark is determined; if the spatial position of the click mark matches with the spatial position of the interactive component model "shooting", the user selects to click on the "shooting" function; and finally, the interactive function event pre-bound to the interactive component model "shooting" is performed, that is, the shooting function is triggered and called, and the process shown in the steps 201 to 203 can be specifically executed.

Step 202, selecting, from a virtual reality image, scene information corresponding to the shooting range of the shooting equipment model for render-to-texture.

Step 203, displaying the shooting equipment model in a virtual reality space, and placing a rendered texture map in a preset viewing frame area of the shooting equipment model.

For example, as shown in Fig. 4, after the user clicks the hover ball for the "shooting" function, a corresponding shooting function panel can be presented, and then a shooting equipment model, for example, in the form of a selfie stick camera, is displayed in the virtual reality space, and then a viewing screen is displayed in the viewing frame.

In this embodiment, if the user needs to shoot image information within the desired shooting range, the shooting range of the shooting equipment model can be dynamically adjusted by inputting an adjusting instruction for the shooting range.

There may exist various optional manners for inputting the calling instruction for the shooting function by the user, and as an optional manner, the calling instruction for the shooting function can be input through a user hand gesture, and correspondingly, on the VR device side, the user's image information shot by the camera can be firstly identified to obtain user hand gesture information; then the user hand gesture information is matched with preset hand gesture information, wherein each of different pieces of preset hand gesture information has a corresponding preset adjusting instruction (for adjusting the shooting range of the shooting equipment); and then the preset adjusting instruction corresponding to the matched preset hand gesture information can be obtained as an adjusting instruction for the shooting range.

For example, the user's hand moving left, or right, or up, or down, or up left, or down left, etc., may trigger the shooting equipment model, along with its shooting range, to follow the movement of left, or right, or up, or down, or up left, or down left, etc.; the user's hand moving forwards or backwards may trigger adjusting a shooting focal length of a camera tool; and the user's hand rotating may trigger the shooting equipment model, along with its shooting range, to follow the rotation. In this optional manner, the user can conveniently perform the shooting manipulation, improving the shooting efficiency.

As another optional manner, the calling instruction for the shooting function can be input through the interactive component model, and correspondingly, on the VR device side, at least one interactive component model can be displayed in the virtual reality space, where each interactive component model is preset with a preset instruction for adjusting the shooting range, and for example, the interactive component models respectively representing movement in four directions, i.e., up, down, left, and right, and the interactive component models representing camera rotation and focal length adjustment, are displayed; then, by identifying the user's image information shot by the camera, the position of the user hand or the user handheld device is obtained and mapped into the virtual reality space, and further a spatial position of a click mark of the user hand or the user handheld device is determined; and if the spatial position of the click mark matches a spatial position of a target interactive component model in the interactive component models representing the shooting range to be adjusted, a preset instruction for adjusting the shooting range corresponding to the target interactive component model is taken as an adjusting instruction for the shooting range of the shooting equipment.

For example, if the spatial position of the click mark of the user hand or the user handheld device matches a spatial position of the interactive component model "to left", the shooting equipment model, along with its shooting range, may be triggered to follow the left movement; and if the spatial position of the click mark of the user hand or the user handheld device matches a spatial position of the interactive component model "turn left", the shooting equipment model, along with its shooting range, may be triggered to follow the turn left. In this optional manner, manipulation of an entity device button is eliminated, and hence the condition that the entity device button is easily damaged to influence the user manipulation can be avoided.

As still another optional manner, the calling instruction for the shooting function can be input through a manipulation device, and correspondingly, on the VR device side, the adjusting instruction for the shooting range sent by the manipulation device can be received; and/or, by identifying the image information shot by the camera for the manipulation device, a spatial position change of the manipulation device is determined, and the adjusting instruction for the shooting range of the shooting equipment is determined according to the spatial position change of the manipulation device.

For example, the manipulation device may be a handle device held by the user, a shooting range of the viewing frame of the shooting equipment is bound with the handle, and the user moves/rotates the handle to find a view; and the focal length of the viewing screen and the like can be adjusted by pushing the joystick forwards and backwards. Besides, the handle can be preset with entity buttons for controlling up, down, left, right, and rotation, and the user can directly initiate adjusting the shooting range of the shooting equipment through these entity buttons.

Step 204, in response to an adjusting instruction for the shooting range, dynamically adjusting the shooting range of the shooting equipment model.

Illustratively, the step 204 may specifically include: dynamically adjusting the shooting range of the shooting equipment model by adjusting the spatial position of the shooting equipment model (e.g., spatial position adjustment of up-down, left-right, left-right rotation), and/or the focal length of a camera tool (e.g., the Camera tool of Unity).

In order to guide the user how to adjust the shooting range of the shooting equipment model, optionally, the method of the present embodiment may further include: outputting adjustment method guidance information for the shooting range. For example, the guidance information for assisting the user in shooting operations, such as "pushing the joystick forward and backward to adjust the focal length", "pressing button B to quit shooting", "clicking trigger button to shoot", can be prompted, improving the efficiency of the user in adjusting the shooting range of the shooting equipment model and other shooting related operations.

Step 205, selecting, from the virtual reality image, in real time, the scene information corresponding to the adjusted shooting range for render-to-texture.

Step 206, placing real-time rendered texture map in the preset viewing frame area of the shooting equipment model.

Illustratively, the Step 206 may specifically include: performing motion display for the shooting equipment model based on the dynamically adjusted spatial position of the shooting equipment model, and meanwhile, placing the real-time rendered texture map in the preset viewing frame area of the shooting equipment model. In the present embodiment, in the moving process of the shooting equipment (such as the selfie stick camera shown in Fig. 4), the VR scene content in the dynamic moving shooting range can be presented in the preset viewing frame area in real time, and the viewing screen presenting effect will not be influenced by factors such as swing of the shooting equipment, so that a real shooting experience of the user can be well simulated, and the VR usage experience of the user can be further improved.

Step 207, in response to an instruction for confirming to shoot, obtaining the shot image information by recording real-time map information in the viewing frame area.

For the present embodiment, in order to show an effect closer to real shooting, optionally, the step 207 may specifically include: outputting prompt information related to that the video recording is in progress, or displaying a screen with a photographing flicker effect in the viewing frame area; and after confirming that the shot image information is obtained, outputting prompt information that recording for the shooting is successful.

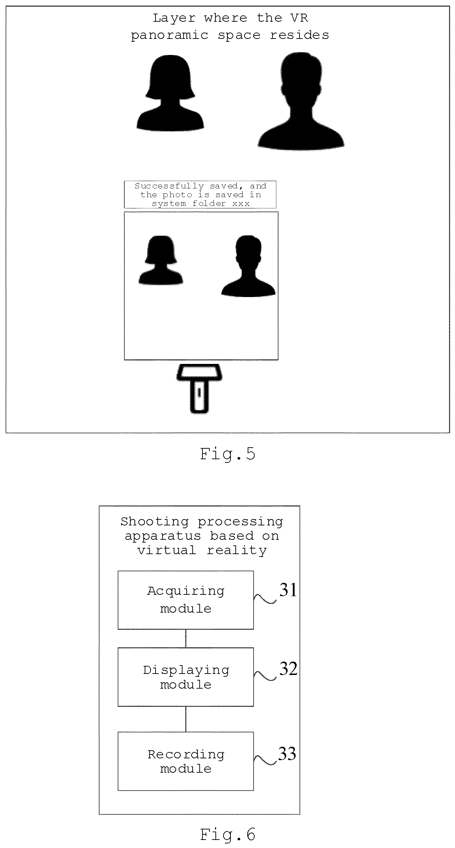

For example, in the case of a video recording service, text or icon information and the like representing the video recording is in progress may be displayed during video recording, and a voice prompt and the like representing the video recording is in progress may be output together. In the case of a photo service, when a user clicks to photograph, a blank transition picture can be rapidly displayed in the viewing frame area and then rapidly switched back to the map information, so that a photographing flicker effect is achieved, and the user can feel closer to the real shooting experience. As shown in Fig. 5, after the photo is taken successfully, it can be prompted that the taken photo is saved successfully, and the directory for saving the photo can be displayed.

Further, in order to meet the user's requirement on sharing the taken photos or videos, after the Step 207, the embodiment may further include: in response to a sharing instruction, sharing the shot image information to a target platform (such as a social platform, through which the shot image information can be accessed by the user or other users), or to a specified user in a contact list through a server (such as sharing the shot image information to a friend specified by the user through the server), or to users corresponding to other virtual objects in the same virtual reality space.

For example, the user may view other users who currently enter the same room, and then select a user among them to share the shot image information to him; or select another virtual object in the same VR scene through user focus, handle ray, and the like, to share the shot image information to the virtual object; the system can find a corresponding target user according to the identification of the virtual object, and forward the shot image information shared by the user to the target user, for the purpose of sharing the taken photos or videos.

In order to make the user's VR experience closer to the real experience, further optionally, the method of the present embodiment may further include: displaying, in the same virtual reality space, a shooting equipment model used when another virtual object shoots. For example, in a VR scene of a live concert, there is a need to photograph a live VR scene, or to perform selfie among several virtual characters, and the like, therefore, a used shooting equipment model can be displayed when another virtual object shoots. For example, in a VR scene of a concert live, there are three virtual objects, namely a virtual object a, a virtual object b, and a virtual object c, which correspond to three users entering the same room. When the system monitors that the virtual object a shoots, the shooting equipment model used by the virtual object a can be synchronously presented to the virtual object b and the virtual object c, so that two users of the virtual object b and the virtual object c can intuitively know that the virtual object a is shooting currently. And, in order to present a more realistic experience, the system may synchronize map information within the viewing frame area of the shooting equipment model (e.g., a texture map rendered for the VR scene within the shooting range selected by the virtual object a) together to user sides of the virtual object b and the virtual object c as well. In this way, a more realistic VR experience can be experienced when multiple persons (virtual objects) perform selfie.

In order to avoid a display conflict caused when multiple persons lift the shooting equipment model at the same time, optionally, the displaying, in the same virtual reality space, a shooting equipment model used when another virtual object shoots may specifically include: displaying, in the same virtual reality space, the shooting equipment model of the virtual object of one's own party and the shooting equipment model of the another virtual object according to their respective corresponding separate spatial positions. For example, the shooting equipment model of each virtual object in the same virtual reality space has a respective corresponding separate spatial position, so that the shooting equipment models do not affect each other, and thus the problem of display conflict among the shooting equipment models does not exist.

Compared with the prior art, the present embodiment can provide a shooting service such as a photo service or a video recording service for a user in the process of watching VR video, so that the user in a virtual reality environment can experience the feeling as if the user shoots with a camera in a real environment, improving the VR usage experience of the user.

Further, as a specific implementation of the method shown in Fig. 1 and Fig. 2, the present embodiment provides a shooting processing apparatus based on virtual reality, and as shown in Fig. 6, the apparatus comprises: an acquiring module 31, a displaying module 32 and a recording module 33.

The acquiring module 31 is configured to, in response to a calling instruction for a shooting function, acquire a shooting equipment model.

The displaying module 32 is configured to, display the shooting equipment model in a virtual reality space, and display viewing screen information in a preset viewing frame area of the shooting equipment model, wherein the viewing screen information is obtained according to virtual reality scene information.

The recording module 33 is configured to, in response to an instruction for confirming to shoot, obtain shot image information by recording real-time viewing screen information in the viewing frame area.

In a specific application scenario, the displaying module 32 is specifically configured to acquire a shooting range of the shooting equipment model; select, from a virtual reality image, scene information corresponding to the shooting range for render-to-texture; and place a rendered texture map in the preset viewing frame area of the shooting equipment model;
accordingly, the recording module 33 is specifically configured to obtain the shot image information by recording real-time map information in the viewing frame area.

In a specific application scenario, the apparatus may further comprise: an adjusting module;
wherein, the adjusting module is configured to, before the in response to an instruction for confirming to shoot, obtaining shot image information by recording real-time viewing screen information in the viewing frame area, in response to an adjusting instruction for the shooting range, dynamically adjust the shooting range of the shooting equipment model;
the displaying module 32 is further configured to select, from the virtual reality image, in real time, the scene information corresponding to the adjusted shooting range for render-to-texture; and place real-time rendered texture map in the preset viewing frame area of the shooting equipment model.

In a specific application scenario, the adjusting module is specifically configured to dynamically adjust the shooting range by adjusting a spatial position of the shooting equipment model and/or a shooting focal length of a camera tool.

In a specific application scenario, the displaying module 32 is specifically configured to perform motion display for the shooting equipment model based on the dynamically adjusted spatial position of the shooting equipment model, and meanwhile, place the real-time rendered texture map in the preset viewing frame area of the shooting equipment model.

In a specific application scenario, the acquiring module 31 is further configured to, before the in response to an adjusting instruction for the shooting range, dynamically adjusting the shooting range of the shooting equipment model, identify image information shot by a camera for the user, to obtain user hand gesture information; match the user hand gesture information with preset hand gesture information; and acquire a preset adjusting instruction corresponding to matched preset hand gesture information, as the adjusting instruction for the shooting range.

In a specific application scenario, the acquiring module 31 is further configured to, before the in response to an adjusting instruction for the shooting range, dynamically adjusting the shooting range of the shooting equipment model, display at least one interactive component model in the virtual reality space, wherein the interactive component model is each preset with an instruction for adjusting the shooting range; determine a spatial position of a click mark of a user hand or a user handheld device by identifying image information shot by a camera for the user; if the spatial position of the click mark matches a spatial position of a target interactive component model in the interactive component model, take a preset instruction for adjusting the shooting range corresponding to the target interactive component model as the adjusting command for the shooting range.

In a specific application scenario, the acquiring module 31 is further configured to, before the in response to an adjusting instruction for the shooting range, dynamically adjusting the shooting range of the shooting equipment model, receive the adjusting instruction for the shooting range sent by a manipulation device; and/or, determine a spatial position change of the manipulation device by identifying image information shot by a camera for a manipulation device, and determine the adjusting instruction for the shooting range according to the spatial position change of the manipulation device.

In a specific application scenario, the displaying module 32 is further configured to output adjustment method guidance information for the shooting range.

In a specific application scenario, the apparatus further comprises: a sharing module;
wherein, the sharing module is configured to, after obtaining the shot image information, in response to a share instruction, share the shot image information to a target platform, or to a specified user in a contact list through a server, or to users corresponding to other virtual objects in the same virtual reality space.

In a specific application scenario, the displaying module 32 is further configured to display, in the same virtual reality space, a shooting equipment model used when another virtual object shoots.

In a specific application scenario, the displaying module 32 is further specifically configured to display, in the same virtual reality space, the shooting equipment model of the virtual object of one's own party and the shooting equipment model of the another virtual object according to their respective corresponding separate spatial positions.

In a specific application scenario, optionally, the shot image information includes: shot photo information or video recording information.

In a specific application scenario, the recording module 33 is specifically configured to output prompt information related to that the video recording is in progress, or display a screen with a photographing flicker effect in the viewing frame area; and after confirming that the shot image information is obtained, output prompt information that recording for the shooting is successful.

It should be noted that, other corresponding descriptions of the functional units involved in the shooting processing apparatus based on virtual reality according to this embodiment may refer to the corresponding descriptions in Fig. 1 and Fig. 2, and are not repeated herein.

Based on the methods shown in Fig. 1 and Fig. 2, correspondingly, the present embodiment further provides a computer-readable storage medium, having stored thereon a computer program, which, when executed by a processor, implements the shooting processing method based on virtual reality shown in Fig. 1 and Fig. 2.

Based on such understanding, the technical solution of the present disclosure may be embodied in the form of a software product, which may be stored in a non-volatile storage medium (which may be a CD-ROM, a U-disk, a removable hard disk, etc.), and includes several instructions for enabling a computer device (which may be a personal computer, a server, or a network device, etc.) to execute the methods of various implementation scenarios of the present disclosure.

Based on the foregoing methods shown in Fig. 1 and Fig. 2 and the virtual apparatus embodiment shown in Fig. 6, to achieve the foregoing objective, an embodiment of the present disclosure further provides an electronic device, which may specifically be a virtual reality device, such as a VR head-mounted device, and the like; the device includes a storage medium and a processor; the storage medium is for storing a computer program; and the processor is for executing the computer program to implement the shooting processing method based on virtual reality as shown in Fig. 1 and Fig. 2 described above.

Optionally, the entity device may further include a user interface, a network interface, a camera, a Radio Frequency (RF) circuit, a sensor, an audio circuit, a WI-FI module, and the like. The user interface may include a display, an input unit such as a keyboard, etc., and optional user interfaces may also include a USB interface, a card reader interface, etc. The network interface may optionally include a standard wired interface, a wireless interface (e.g., WI-FI interface), etc.

It will be understood by those skilled in the art that, the above-described entity device structure provided in the embodiment does not constitute a limitation to the entity device, and may include more or fewer components, or combine some components, or have different component arrangements.

The storage medium can also comprise an operating system and a network communication module. The operating system is a program that manages hardware and software resources of the entity device, and supports the execution of the information processing program as well as other software and/or programs. The network communication module is used for realizing communication among components inside the storage medium, and communication with other hardware and software in the information processing entity device.

Through the description of the above embodiments, those skilled in the art will clearly understand that the present disclosure may be implemented by software plus an essential general hardware platform, or may also be implemented by hardware. With the solution of this embodiment, compared with the prior art at present, the present embodiment can provide a shooting service such as a photo service or a video recording service for a user in the process of watching VR video, so that the user in a virtual reality environment can experience the feeling as if the user shoots with a camera in a real environment, improving the VR usage experience of the user.

It is noted that, relational terms such as "first" and "second" and the like in this specification are used only to distinguish one entity or action from another entity or action without necessarily requiring or implying any actual such relationship or order between such entities or actions. Also, the terms "comprise", "include" or any other variation thereof, are intended to cover a non-exclusive inclusion, such that a process, method, article, or apparatus that comprises a list of elements does not include only those elements but may include other elements not expressly listed or inherent to such process, method, article, or apparatus. Without further limitation, an element defined by the phrase "comprising an ......" does not exclude the presence of other identical elements in the process, method, article, or apparatus that comprises the element.

The above only for describes particular embodiments of the present disclosure, so as to enable those skilled in the art to understand or implement the present disclosure. Various modifications to these embodiments will be obvious to those skilled in the art, and the generic principles defined herein may be applied to other embodiments without departing from the spirit or scope of the present disclosure. Thus, the present disclosure is not intended to be limited to the embodiments shown herein but is to be accorded the widest scope consistent with the principles and novel features disclosed herein.

## Claims

1. A shooting processing method based on virtual reality, **characterized by** comprising:
in response to a calling instruction for a shooting function, acquiring a shooting equipment model;
displaying the shooting equipment model in a virtual reality space, and displaying viewing screen information in a preset viewing frame area of the shooting equipment model, wherein the viewing screen information is obtained according to virtual reality scene information; and
in response to an instruction for confirming to shoot, obtaining shot image information by recording real-time viewing screen information in the viewing frame area.

2. The method according to claim 1, **characterized in that**, the displaying viewing screen information in a preset viewing frame area of the shooting equipment model comprises:
acquiring a shooting range of the shooting equipment model;
selecting, from a virtual reality image, scene information corresponding to the shooting range for render-to-texture; and
placing a rendered texture map in the preset viewing frame area of the shooting equipment model; and
the obtaining shot image information by recording real-time viewing screen information in the viewing frame area comprises:
obtaining the shot image information by recording real-time map information in the viewing frame area.

3. The method according to claim 2, **characterized in that**, before the in response to an instruction for confirming to shoot, obtaining shot image information by recording real-time viewing screen information in the viewing frame area, the method further comprises:
in response to an adjusting instruction for the shooting range, dynamically adjusting the shooting range of the shooting equipment model;
selecting, from the virtual reality image, in real time, the scene information corresponding to the adjusted shooting range for render-to-texture; and
placing real-time rendered texture map in the preset viewing frame area of the shooting equipment model.

4. The method according to claim 3, **characterized in that**, the in response to an adjusting instruction for the shooting range, dynamically adjusting the shooting range of the shooting equipment model comprises:
dynamically adjusting the shooting range by adjusting a spatial position of the shooting equipment model and/or a shooting focal length of a camera tool.

5. The method according to claim 4, **characterized in that**, the placing real-time rendered texture map in the preset viewing frame area of the shooting equipment model comprises:
performing motion display for the shooting equipment model based on the dynamically adjusted spatial position of the shooting equipment model, and meanwhile, placing the real-time rendered texture map in the preset viewing frame area of the shooting equipment model.

6. The method according to claim 3, **characterized in that**, before the in response to an adjusting instruction for the shooting range, dynamically adjusting the shooting range of the shooting equipment model, the method further comprises:
identifying image information shot by a camera for the user, to obtain user hand gesture information;
matching the user hand gesture information with preset hand gesture information; and
acquiring a preset adjusting instruction corresponding to matched preset hand gesture information, as the adjusting instruction for the shooting range.

7. The method according to claim 3, **characterized in that**, before the in response to an adjusting instruction for the shooting range, dynamically adjusting the shooting range of the shooting equipment model, the method further comprises:
displaying at least one interactive component model in the virtual reality space, wherein the interactive component model is each preset with an instruction for adjusting the shooting range;
determining a spatial position of a click mark of a user hand or a user handheld device by identifying image information shot by a camera for the user; and
if the spatial position of the click mark matches a spatial position of a target interactive component model in the interactive component model, taking a preset instruction for adjusting the shooting range corresponding to the target interactive component model as the adjusting command for the shooting range.

8. The method according to claim 3, **characterized in that**, before the in response to an adjusting instruction for the shooting range, dynamically adjusting the shooting range of the shooting equipment model, the method further comprises:
receiving the adjusting instruction for the shooting range sent by a manipulation device; and/or,
determining a spatial position change of the manipulation device by identifying image information shot by a camera for a manipulation device, and determining the adjusting instruction for the shooting range according to the spatial position change of the manipulation device.

9. The method according to any of claims 3 to 8, **characterized in that**, the method further comprises:
outputting adjustment method guidance information for the shooting range.

10. The method according to claim 1, **characterized in that**, after obtaining the shot image information, the method further comprises:
in response to a share instruction, sharing the shot image information to a target platform, or to a specified user in a contact list through a server, or to users corresponding to other virtual objects in the same virtual reality space.

11. The method according to claim 1, **characterized in that**, the method further comprises:
displaying, in the same virtual reality space, a shooting equipment model used when another virtual object shoots.

12. The method according to claim 11, **characterized in that**, the displaying, in the same virtual reality space, a shooting equipment model used when another virtual object shoots comprises:
displaying, in the same virtual reality space, the shooting equipment model of the virtual object of one's own party and the shooting equipment model of the another virtual object according to their respective corresponding separate spatial positions.

13. The method according to claim 1, **characterized in that**, the shot image information includes: shot photo information or video recording information.

14. The method according to claim 13, **characterized in that**, the in response to an instruction for confirming to shoot, obtaining shot image information by recording real-time viewing screen information in the viewing frame area comprises:
outputting prompt information related to that the video recording is in progress, or displaying a screen with a photographing flicker effect in the viewing frame area; and
after confirming that the shot image information is obtained, outputting prompt information that recording for the shooting is successful.

15. A shooting processing apparatus based on virtual reality, **characterized by** comprising:
an acquiring module configured to, in response to a calling instruction for a shooting function, acquire a shooting equipment model;
a displaying module configured to, display the shooting equipment model in a virtual reality space, and display viewing screen information in a preset viewing frame area of the shooting equipment model, wherein the viewing screen information is obtained according to virtual reality scene information; and
a recording module configured to, in response to an instruction for confirming to shoot, obtain shot image information by recording real-time viewing screen information in the viewing frame area.

16. A computer-readable storage medium having stored thereon a computer program, **characterized in that**, the computer program, when executed by a processor, implements the method according to any of claims 1 to 14.

17. An electronic device, comprising a storage medium, a processor, and a computer program stored on the storage medium and executable on the processor, **characterized in that**, the processor, when executing the computer program, implements the method according to any of claims 1 to 14.
